# EUROPÄISCHE PATENTSCHRIFT

(11) **EP 1 400 163 B1**
(45) Veröffentlichungstag und Bekanntmachung des Hinweises auf die Patenterteilung: **14.10.2015**
(21) Anmeldenummer: 03018809.8
(22) Anmeldetag: 19.08.2003
(51) Int. Cl.: A01F 15/07

(54) **Rundballenpresse**
Rotobaler
Presse à balles rondes

(30) Priorität: 18.09.2002 DE 10243294
(43) Veröffentlichungstag der Anmeldung: 24.03.2004
(60) Teilanmeldung: 14166836.8
(73) Patentinhaber: Lely Vermeer Maschinenfabrik GmbH, 38304 Wolfenbüttel (DE)
(72) Erfinder: Rodewald, Peter, 38321 Neindorf (DE)
(74) Vertreter: Jennen, Peter Leonardus Hendricus

(56) Entgegenhaltungen:
- DE-A- 10 045 842
- GB-A- 2 146 947
- US-A- 5 433 059
- US-A- 5 916 116
- US-A1- 2002 046 552

## Beschreibung

Die Erfindung betrifft eine Rundballenpresse, deren Pressraum umfangsseitig durch umlaufende Presselemente gebildet wird, mit wenigstens einer ein Vorzugswalzenpaar aufweisenden Umhüllvorrichtung zum Umhüllen eines Rundballens mit Umhüllmaterial, das mittels wenigstens eines Zuführelementes durch einen Einführspalt im Pressraum in diesen einführbar ist, wobei das Zuführelement abstandsveränderbar zum Einführspalt angeordnet ist.

Je nach Einsatzzweck der Rundballenpresse stehen unterschiedliche Umhüllmaterialien zur Verfügung. Bindegarn ist kostengünstiger als Netzbahnen, hat aber den Nachteil längerer Umhüllzeiten, weshalb Netzbindungen in jüngster Zeit zunehmende Verbreitung finden. Bei Rundballenpressen mit Presswalzen wird die Netzbahn durch einen durch zwei benachbarte Presselemente gebildeten Einführspalt in den Pressraum eingeführt. Eine derartige Rundballenpresse ist beispielsweise aus der DE - U1 8327172.4 bekannt. Hierbei ist benachbart zu einer Netzumhüllvorrichtung eine Garnumhüllvorrichtung angeordnet, so dass entweder Netz oder Garn wahlweise durch einen einzigen Einführspalt in den Pressraum einführbar ist. Nachteilig ist hierbei, dass sich während des Pressvorganges aufgewirbeltes Kurzgut (Strohkleinteilchen) und Staub im Bereich der Umhüllvorrichtungen absetzt und den Startvorgang, d. h. die Zuführung des Bindemittels erschwert oder verhindert. Es ist bereits versucht worden, die Materialanhäufungen mit Druckluft zu beseitigen, was jedoch relativ hohen Aufwand bedeutet.

Rundballenpressen mit variablem Pressraum und Riemen als Förder- und Presseinrichtung, siehe beispielsweise DE - A1 19851470, haben sich im praktischen Einsatz auch bei kritischem Material wie sehr trockenem, sprödem Gerstenstroh erfolgreich bewährt. Aufgrund des Presssystems steht hier praktisch nur ein Einführspalt für das Umhüllmaterial zur Verfügung, d. h. entweder können die Umhüllvorrichtungen im gestellfesten Vordergehäuse oberhalb des Aufsammlers angeordnet sein oder im unteren Bereich des aufklappbaren Hintergehäuses. Bei der Anordnung der Umhüllvorrichtungen im Vordergehäuse kommt es bei bestimmten Materialien zu verstärkten Materialansammlungen, weil die Umlenkrolle des Pressriemens oberhalb des Einführspalts Material nach außen entgegen der Zuführrichtung des Umhüllmaterials hinauswirft und weil es konstruktiv vorteilhaft ist, beide Umhüllvorrichtungen, d. h. für Netz und für Garn, möglichst nahe am Einführspalt anzuordnen. Aus der US 4,174,661 ist eine Rundballenpresse bekannt, bei der Bindegarn durch den Spalt zwischen einer Riemenumlenkwalze und einer dem Pressraum abgewandten Starterwalze zugeführt wird. Nachteilig ist hierbei, dass die Starterwalze keine Pressarbeit verrichten kann. Einen ähnlichen Nachteil besitzt auch die Lösung der DE 3617155 C1.

Eine durch die US 5 916 116 A bekannte Umhüllvorrichtung einer Rundballenpresse weist zwei auf einer Schwenkeinheit angeordnete Klemmelemente auf, zwischen denen das Netz reibschlüssig gehalten wird. Zum Start des Umhüllvorganges wird das festgehaltene Netzende durch Verschwenkung der Klemmelemente in den Einführspalt geschoben, wo es vom drehenden Ballen mitgenommen und zwischen den Klemmelementen durchgezogen wird. Auf dem Weg zwischen einer Netzvorratsrolle und Klemmelementen ist das Netz über zwei Rollen mit spiralig angeordneten Oberflächenelementen geführt, die das Netz während des Umhüllvorganges breitziehen sollen.

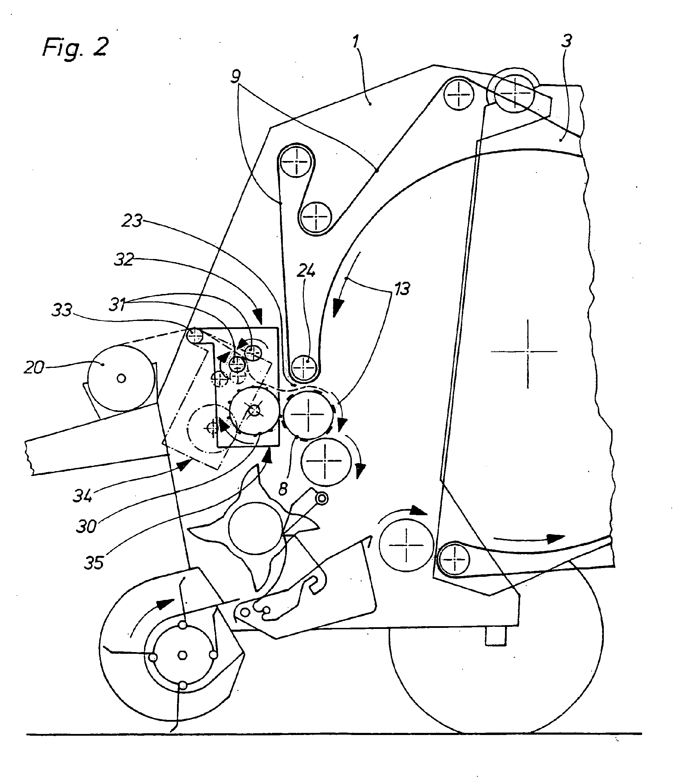

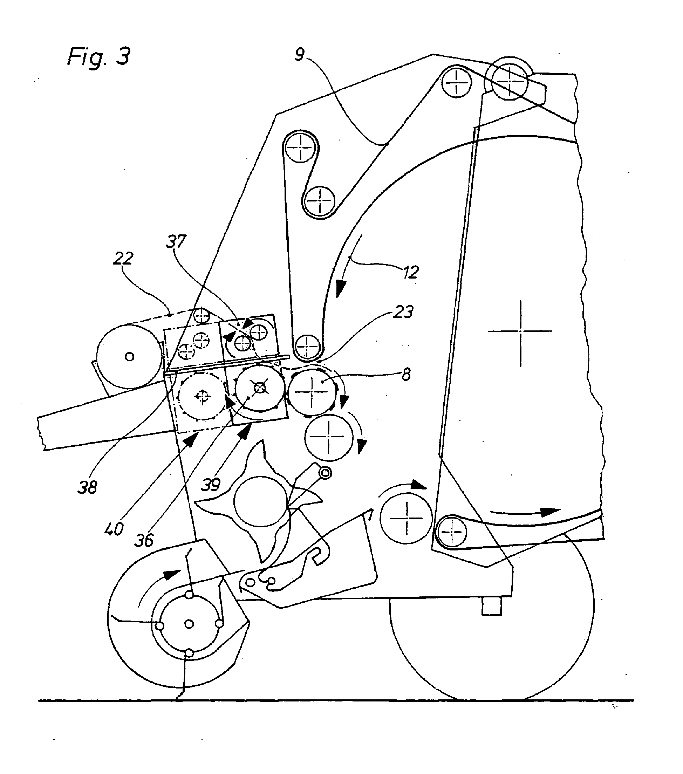

Bei einer durch die US 5 433 059 A bekannten Umhüllvorrichtung wird das Netz durch ein Vorzugswalzenpaar auf ein verschwenkbares Zuführelement gefördert. Das Zuführelement weist einen geraden Abschnitt und einen gekrümmten, an die Kontur einer Förderbandumlenkrolle angepassten Abschnitt auf, der durch Verschwenken des Zuführelementes so weit in den Einführspalt hineinbewegbar ist, bis eine Klemmstelle (pinch point 105, Fig. 2,3) mit dem umlaufenden Förderband gebildet wird. Zum Start eines Umhüllvorganges soll das Netzende entlang des geraden Abschnittes bis zur Klemmstelle laufen, wo der gekrümmte Abschnitt das Netzende gegen das Förderband drücken soll, welches das Netzende mitnehmen und durch den Einführspalt in den Pressraum fördern soll. Obwohl das Zuführelement zum Presselement hin und von diesem wegbewegbar ist, können sich bestimmte Erntegutmaterialien sowohl im Einführspalt aufbauen als auch auf dem geraden Abschnitt des Zuführelementes ansammeln, welche eine sichere Zuführung des Netzendes verhindern. Das Anordnen und Verschwenken des Zuführelementes im Einführspalt hat auch einen relativ großen Einführspalt zur Folge, durch den Material aus dem Pressraum gefördert werden kann.

Der Erfindung liegt die Aufgabe zugrunde, Materialansammlungen im Bereich der Umhüllvorrichtungen zu vermeiden und eine störungsfreie Zuführung der Umhüllmaterialien in den Pressraum mit einfachen Mitteln sicherzustellen.

Diese Aufgabe wird erfindungsgemäß dadurch gelöst, dass das Zuführelement eine einer Presswalze vorgelagerte Zuführwalze ist, die in gleicher Drehrichtung wie die Presswalze antreibbar ist, um in einer Position während des Starts des Umhüllvorganges das freie Ende des Umhüllmaterials in Richtung des Einführspaltes des Umhüllmaterials zu transportieren, und dass die Zuführwalze einer Position während des Pressvorgangs zwischen sich und der Presswalze einen nach unten offenen Spalt bildet.

Während des Pressvorganges wird aufgrund des größeren Abstands zwischen Zuführwalze und Presswalze ein nach unten offener, großer Spalt geschaffen, durch den das Material nach unten auf den Aufsammler fällt und mit in den Rundballen gepresst wird. Aufgewirbelte Materialteilchen fallen dadurch während des zeitlich längeren Pressvorganges nach unten aus dem kritischen Bereich des Einführspalts.

Im Rahmen der Erfindung als vorteilhaft erkannte Ausführungsformen zur Vermeidung von Materialansammlungen sind in den Unteransprüchen gekennzeichnet.

In der Zeichnung sind einige Beispiele des Erfindungsgegenstandes dargestellt. Hierbei zeigt
Fig. 1 in Seitenansicht eine Rundballenpresse nach der Erfindung mit in Volllinie dargestellter Zuführwalze während des Starts des Umhüllvorganges und in Strichlinie gezeichneter, weggeschwenkter Zuführwalze während des Pressvorganges, wobei ein Teil des Hintergehäuses weggeschnitten ist.
Fig. 2 eine Ansicht nach Figur 1 auf eine zweite Ausführungsform der Erfindung, bei der die Zuführwalze und die Umhüllvorrichtung als eine insgesamt verschwenkbare Baueinheit ausgebildet sind und
Fig. 3 eine Ansicht nach Figur 1 auf eine dritte Ausführungsform der Erfindung, bei der die Zuführwalze und die Umhüllvorrichtung als insgesamt verschiebbare Baueinheit ausgebildet sind.

Die Rundballenpresse besitzt ein zweiteiliges Pressengehäuse, bestehend aus einem Vordergehäuse1, welches gestellfest auf einem Fahrgestell 2 ruht und einem Hintergehäuse 3, welches um eine obere Drehachse 4 zum Ballenausstoß in eine nicht gezeigte Entladestellung aufklappbar ist.

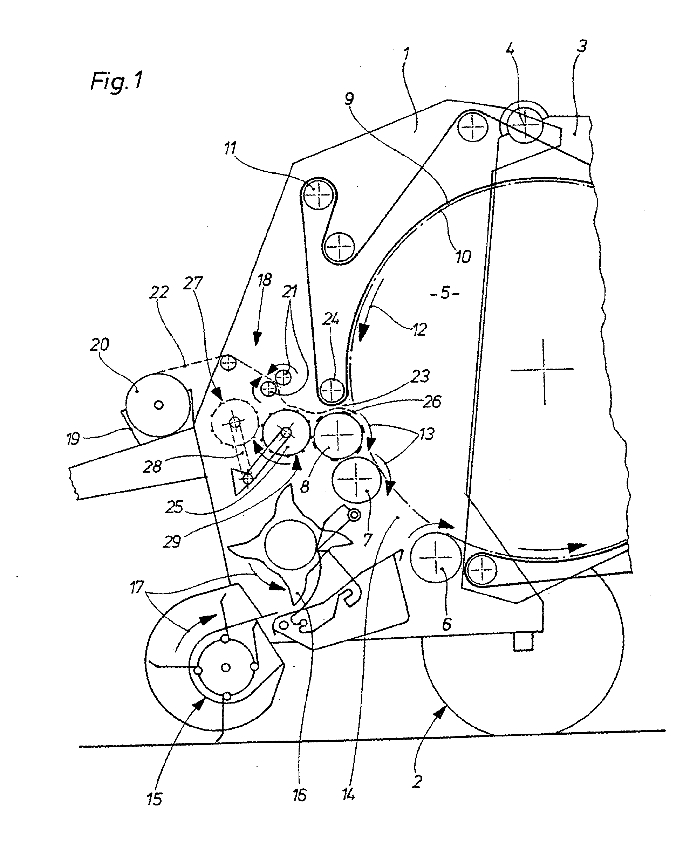

Im Pressengehäuse wird ein Pressraum 5, dessen Durchmesser sich in diesem Ausführungsbeispiel vergrößern kann, von drei antreibbaren, im Vordergehäuse 1 ortsfest aber drehbar angeordneten Presswalzen 6, 7, 8 und von Förder- und Pressriemen 9 gebildet, welche während der Formung eines in Figur 1 in Strichpunktlinien angedeuteten Ballens 10 auf Führungs- oder Umlenkrollen 11 umlaufen und den in Figur 1 dargestellten Verlauf einnehmen. Die gemeinsame Umlaufrichtung der Presswalzen 6, 7, 8 und der Förder- und Pressriemen 9 ist durch Pfeile 12, 13 gekennzeichnet.

Zwischen den beiden Presswalzen 6, 7 ist eine Zuführöffnung 14 für Halmgut freigelassen. Der Zuführöffnung ist ein an sich bekannter Aufsammler 15 mit einem Förder-/Schneidrotor 16 vorgeschaltet, die beide während des Betriebes in durch Pfeile 17 gekennzeichnete Richtungen bewegt werden. Anstelle eines variablen Pressraumes kann im Rahmen der Erfindung auch ein konstanter Pressraum zur Anwendung kommen, z.B. mit Presswalzen oder einem Stabkettenförderer.

Oberhalb des Förder- Schneidrotors 16 ist eine Umhüllvorrichtung 18 angeordnet, bestehend im wesentlichen aus einem im Vordergehäuse 1 angeordneten Vorratsbehälter 19 für eine Umhüllmaterialrolle 20, z. B. Netz oder Folie und zwei ebenfalls im Vordergehäuse 1 gelagerten, antreibbaren Vorzugswalzen 21 zwischen denen das Umhüllmaterial 22 gehalten und geführt wird. Wenigstens eine Vorzugswalze ist, wie bekannt, zum Transport des Umhüllmaterials in den Pressraum 5 solange antreibbar, bis das Umhüllmaterial 22 von dem umlaufenden Pressballen 10 mitgenommen bzw. eingezogen wird.

Die Vorzugswalzen sind außerhalb des Pressraumes 5 benachbart zu einem Einführspalt 23 für das Umhüllmaterial angeordnet, der zwischen einer Umlenkwalze 24 für die Riemen 9 und der darunter angeordneten Presswalze 8 liegt. Der Presswalze 8 ist eine im Vordergehäuse 1 gelagerte Zuführwalze 25 vorgelagert, die in gleicher Drehrichtung wie die Presswalze 8 antreibbar ist, um während des Starts des Umhüllvorganges das freie Vorlaufende 26 des Umhüllmaterials in Richtung des Einführspaltes 23 des Umhüllmaterials 22 zu transportieren, wie in Figur 1 ersichtlich.

Neu ist die schwenkbare Anordnung der Zuführwalze 25, die während des Pressbetriebes eine in Strichlinie dargestellte Position 27 einnimmt und dadurch einen großen, nach unten offenen Spalt zwischen sich und der Presswalze 8 bildet, durch den Erntegutteilchen, die sich beim Stand der Technik

oberhalb der Zuführ- 25 und Presswalze 8 anhäufen, nach unten auf den Aufsammler 15 fallen und mit eingepresst werden. Die Zuführwalze 25 ist an einem Schwenkhebel 28 angeordnet und durch nicht dargestellte geeignete Antriebe beispielsweise beim Öffnen des Hintergehäuses 3 aus einer in Volllinie gezeigten Position 29 in die in Strichlinie gezeigte Position 27 bewegbar. Kurz vor Start des Umhüllvorganges wird die Zuführwalze 25 jeweils in die in Volllinie gezeichnete Position 29 gebracht. Anstelle einer Schwenkbewegung kann die Zuführwalze 25 auch beispielsweise auf geradlinigen Führungen verschiebbar sein. Alternativ oder zusätzlich kann auch die Drehrichtung der Zuführwalze 25 umgekehrt werden oder eine exzentrische Lagerung der Walzen 8, 25 vorgesehen sein, um den Selbstreinigungseffekt zu unterstützen.

Die Funktionsweise der Rundballenpresse ist wie folgt:
Während des Pressbetriebes nimmt die Zuführwalze 25 die in Figur 1 dargestellte, gestrichelt gezeichnete Position 27 ein. Dadurch kann Kleinmaterial, das vom Riemen 9 durch den Einführspalt nach außen gefördert wird und Material, das durch die Spalte zwischen den Riemen auf deren Leertrumseite nach unten fällt, sich nicht mehr auf der Zuführwalze 25, der Presswalze 8 und/oder auf der Umhüllvorrichtung 18 absetzen, weil es durch den Spalt nach unten auf den Aufsammler 15 fällt. Ist der gewünschte Ballendurchmesser oder der gewünschte Pressdruck erreicht, wird vor Auslösung der Umhüllvorrichtung 18 die Zuführwalze 25 in die in Volllinie gezeichnete Position 29 geschwenkt. Durch Antrieb der Vorzugswalzen 21 transportieren diese das freie Vorlaufende 26 des Umhüllmaterials 22 auf die Zuführwalze 25 und die Presswalze 8, welche es sicher und ungehindert in und durch den Einführspalt fördern, wo es in bekannter Weise vom umlaufenden Ballen 10 mitgenommen wird.

Bei dem in Figur 2 dargestellten Ausführungsbeispiel ist die Zuführwalze 30 mit dem Vorzugswalzenpaar 31 konstruktiv zu einer Baueinheit 32 zusammengefasst und um eine gemeinsame Schwenkachse 33 schwenkbar. Während des Pressbetriebes befindet sich diese Baueinheit 32 in gestrichelt gezeichneter Position 34 und bildet mit der Presswalze 8 eine nach unten offene Durchtrittsöffnung für Materialreste. Ist der Enddurchmesser des Ballens oder der Soll-Pressdruck im Pressraum 5 erreicht, schwenkt eine nicht dargestellte Stelleinrichtung die Baueinheit 32 in die in Volllinie gezeichnete Position 35. Bereits während der Öffnung des Hintergehäuses 3 zum Ballenausstoß oder beim Schließen kann die Baueinheit 32 über eine mechanische Verbindung mit dem Hintergehäuse 3 oder eine andere geeignete Stelleinrichtung in die in Strichlinie gezeichnete Position 34 bewegt werden. Diese Bauart hat den Vorteil, dass nunmehr selbst größere Gutansammlungen bis über die Umhüllvorrichtung sicher vermieden werden.

Anstelle der Verschwenkung kann für die Abstandsveränderung zwischen einer Zuführwalze und einer Presswalze eine Verschiebung der Zuführwalze allein oder in Verbindung mit der Umhüllvorrichtung vorgesehen sein. Wie in Figur 3 dargestellt, sind Zuführwalze 36 und Umhüllvorrichtung 37 auf einer ortsfesten Schiebeführung 38 verschiebbar gelagert und in den in Volllinie 39 bzw. Strichlinie 40 gezeichneten Endstellungen durch nicht dargestellte Verriegelungen arretierbar. Die in Volllinie gezeichnete Position 39 bezieht sich auf den Pressbetrieb

Im Rahmen der Erfindung können als Umhüllvorrichtung sowohl Netz- und/oder Folienbindeeinrichtungen verwendet werden, deren Aufbau und Wirkungsweise beispielsweise in der DE 3418681 C1 näher erläutert ist als auch mit Bindegarn arbeitende Bindeeinrichtungen gemäß DE 2645762 C1.

## Patentansprüche

1. Rundballenpresse, deren Pressraum (5) umfangsseitig durch umlaufende Presselemente (6 bis 9) gebildet wird, mit wenigstens einer ein Vorzugswalzenpaar (21, 31) aufweisenden Umhüllvorrichtung (18) zum Umhüllen eines Rundballens mit Umhüllmaterial (22), das mittels wenigstens eines Zuführelementes (25, 30, 36) durch einen Einführspalt (23) im Pressraum (5) in diesen einführbar ist, wobei das Zuführelement (25, 30, 36) abstandsveränderbar zum Einführspalt (23) angeordnet ist, **dadurch gekennzeichnet, dass** das Zuführelement eine einer Presswalze (8) vorgelagerte Zuführwalze (25, 30, 36) ist, die in gleicher Drehrichtung wie die Presswalze (8) antreibbar ist, um in einer Position (29, 35, 40) während des Starts des Umhüllvorganges das freie Ende (26) des Umhüllmaterials in Richtung des Einführspaltes (23) des Umhüllmaterials (22) zu transportieren, und dass die Zuführwalze (25, 30, 36) in einer Position (27, 34, 39) während des Pressvorgangs zwischen sich und der Presswalze ( 8) einen nach unten offenen Spalt bildet.

2. Rundballenpresse nach Anspruch 1, **dadurch gekennzeichnet, dass** das Zuführelement (25, 30, 36) schieb- und/oder schwenkbar gelagert ist, wobei das Zuführelement (25, 30, 36) zum Start des Umhüllvorganges zu der Presswalze (8) hinbewegbar ist und während des Pressvorgangs von der Presswalze (8) wegbewegt ist.

3. Rundballenpresse nach Anspruch 1 oder 2, **dadurch gekennzeichnet, dass** das Zuführelement ein Förderband ist

4. Rundballenpresse nach einem oder mehreren der vorhergehenden Ansprüche, **dadurch gekennzeichnet, dass** der Abstand in Abhängigkeit von der Stellung eines aufklappbaren Pressraumgehäuseteiles (3) veränderbar ist.

5. Rundballenpresse nach einem oder mehreren der vorhergehenden Ansprüche, **dadurch gekennzeichnet, dass** der Abstand in Abhängigkeit vom Pressdruck im Pressraum (5) oder vom Ballendurchmesser veränderbar ist.

6. Rundballenpresse nach einem oder mehreren der vorhergehenden Ansprüche, **dadurch gekennzeichnet, dass** der Abstand in Abhängigkeit vom Antriebsdrehmoment der Presse oder der Presselemente (6 bis 9) veränderbar ist.

7. Rundballenpresse nach einem oder mehreren der vorhergehenden Ansprüche, **dadurch gekennzeichnet, dass** der Abstand in Abhängigkeit von der Betätigung der Umhüllvorrichtung (18) veränderbar ist.

8. Rundballenpresse nach einem oder mehreren der vorhergehenden Ansprüche, **dadurch gekennzeichnet, dass** dem Zuführelement zusätzlich ein Reinigungselement zugeordnet ist.

9. Rundballenpresse nach einem oder mehreren der vorhergehenden Ansprüche, **dadurch gekennzeichnet, dass** die Umhüllvorrichtung (18) oberhalb eines Förder-/ Schneidrotors (16) im Vordergehäuse (1) der Rundballenpresse angeordnet ist.

## Claims

1. Rotobaler with a pressing chamber (5) which is circumferentially formed by moved pressing elements (6 to 9), with at least one wrapping device (18) comprising a pair of advancing rollers (21, 31) the wrapping device (18) being arranged for wrapping a round bale with wrapping material (22) which can be introduced by means of at least one feed element (25, 30, 36) into the pressing chamber (5) through an introducing nip (23) therein, wherein the feed element (25, 30, 36) is arranged in a distance-changeable manner with respect to the introducing nip (23), **characterized in that** the feed element is a feed roller (25, 30, 36) which is mounted upstream of a pressing roller (8) and can be driven in the same rotating direction as the pressing roller (8), wherein the feed roller (25, 30, 36) can be driven for transporting the free end (26) of the wrapping material in the direction of the introducing nip (23) of the wrapping material (22) when the feed roller (25, 30, 36) is in a position (29, 35, 40) during the starting of the wrapping operation, and **in that**, the feed roller (25, 30, 36) forms a downwardly open nip between itself and the pressing roller (8) when being in a position (27, 34, 39) during the pressing operation.

2. Rotobaler according to Claim 1, **characterized in that** the feed element (25, 30, 36) is mounted slidably and/or pivotably, wherein the feed element (25, 30, 36) is movable towards the pressing roller (8) at the starting of the wrapping operation and is moved away from the pressing roller (8) during the pressing operation.

3. Rotobaler according to Claim 1 or 2, **characterized in that** the feed element is a conveyor belt.

4. Rotobaler according to one or more of the preceding claims, **characterized in that** the distance can be varied depending on the position of a part (3) of a pressing chamber casing which can be opened.

5. Rotobaler according to one or more of the preceding claims, **characterized in that** the distance can be varied depending on the pressing pressure in the pressing chamber (5) or on the bale diameter.

6. Rotobaler according to one or more of the preceding claims, **characterized in that** the distance can be varied depending on the driving torque of the baler or of the pressing elements (6 to 9).

7. Rotobaler according to one or more of the preceding claims, **characterized in that** the distance can be varied depending on the actuation of the wrapping device (18).

8. Rotobaler according to one or more of the preceding claims, **characterized in that** the additionally a cleaning element is assigned to the feed element.

9. Rotobaler according to one or more of the preceding claims, **characterized in that** the wrapping device (18) is positioned above a conveying/cutting rotor (16) in the front housing (1) of the rotobaler.

## Revendications

1. Presse à balles rondes, dont la chambre de pressage (5) est formée du côté périphérique par des éléments de pressage rotatifs (6 à 9), la presse comprenant au moins un dispositif d'emballage (18) comprenant une paire de rouleaux d'avance (21, 31), le dispositif d'emballage (18) est adapté pour l'enveloppement d'une balle ronde avec un matériau d'emballage (22) qui peut être inséré dans la chambre de pressage (5) à travers un interstice d'insertion (23) dans celui-ci au moyen d'au moins un élément à convoyer (25, 30, 36), l'élément à convoyer (25, 30, 36) étant disposé à une distance changeable de l'interstice d'insertion (23), **caractérisée en ce que** l'élément à convoyer est un rouleau à convoyer (25, 30, 36) placé en amont d'un rouleau de pressage (8), le rouleau à convoyer (25, 30, 36) peut être entraîné dans le même sens de rotation que le rouleau de pressage (8), afin de transporter l'extrémité libre (26) du matériau d'emballage en direction de l'interstice d'insertion (23) du matériau d'emballage (22) étant dans une position (29, 35, 40) pendant le commencement de l'opération d'enveloppement, et **en ce que** le rouleau à convoyer (25, 30, 36) forme entre lui-même et le rouleau de pressage (8) un interstice ouvert vers le bas étant dans une position (27, 34, 39) pendant l'opération de pressage.

2. Presse à balles rondes selon la revendication 1, **caractérisée en ce que** l'élément à convoyer (25, 30, 36) est monté de manière coulissante et/ou pivotante, l'élément à convoyer (25, 30, 36) pouvant être déplacé en direction du rouleau de pressage (8) au commencement de l'opération d'enveloppement et étant déplacé à l'écart du rouleau de pressage (8) pendant l'opération de pressage.

3. Presse à balles rondes selon la revendication 1 ou 2, **caractérisée en ce que** l'élément à convoyer est une bande transporteuse.

4. Presse à balles rondes selon l'une quelconque ou plusieurs des revendications précédentes, **caractérisée en ce que** la distance est changeable en fonction de la position d'une partie rabattable (3) de carter de chambre de pressage.

5. Presse à balles rondes selon l'une quelconque ou plusieurs des revendications précédentes, **caractérisée en ce que** la distance est changeable en fonction de la pression de pressage dans la chambre de pressage (5) ou du diamètre de balle.

6. Presse à balles rondes selon l'une quelconque ou plusieurs des revendications précédentes, **caractérisée en ce que** la distance est changeable en fonction du moment d'entraînement de la presse ou des éléments de pressage (6 à 9).

7. Presse à balles rondes selon l'une quelconque ou plusieurs des revendications précédentes, **caractérisée en ce que** la distance est changeable en fonction de l'actionnement du dispositif d'emballage (18).

8. Presse à balles rondes selon l'une quelconque ou plusieurs des revendications précédentes, **caractérisée en ce qu'**en outre un élément de nettoyage est associé à l'élément à convoyer.

9. Presse à balles rondes selon l'une quelconque ou plusieurs des revendications précédentes, **caractérisée en ce que** le dispositif d'emballage (18) est disposé au-dessus d'un rotor d'alimentation/de coupe (16) dans le carter avant (1) de la presse à balles rondes.
